(19) Europäisches Patentamt
European Patent Office
Office européen des brevets

(11) Publication number: **0 348 040 B1**

# (12) EUROPEAN PATENT SPECIFICATION

(45) Date of publication of patent specification: **28.12.94**

(51) Int. Cl.[5]: **C08J 5/12**, C09D 7/12, B29C 45/14

(21) Application number: **89305199.5**

(22) Date of filing: **23.05.89**

## (54) Insert injection molding method and molded article.

(30) Priority: **25.05.88 JP 127539/88**

(43) Date of publication of application:
**27.12.89 Bulletin 89/52**

(45) Publication of the grant of the patent:
**28.12.94 Bulletin 94/52**

(84) Designated Contracting States:
**AT BE CH DE ES FR GB GR IT LI LU NL SE**

(56) References cited:
**DE-A- 3 134 236**

**DATABASE WPI, abs.no.78-39033a, Derwent Publications Ltd, London, GB ; & JP-A-53042251**

**DATABASE WPIL, abs.no.86-32391, Derwent Publications Ltd, London, GB ; & JP-A-61241321**

**PLASDOC - CENTRAL PATENTS INDEX - BASIC ABSTRACTS JOURNAL, vol. 8513, no. c85, 22 May 1985, LONDON GB, page 310, abstract no. 85-076954/13 ; "Resin composition for RIM"**

**JOURNAL OF POLYMER SCIENCE, POLYMER CHEMISTRY EDITION. vol. 14, 1976, NEW YORKUS pages 1735 - 1741; W.J. Bailey et al.: "Synthesis of monomers that expand on polymerisation"**

(73) Proprietor: **POLYPLASTICS CO. LTD.**
**3-13, Azuchicho, 2-chome**
**Chuo-Ku**
**Osaka-shi**
**Osaka 541 (JP)**

(72) Inventor: **Yamamoto, Seiji**
**1561, Gendoji-cho**
**Fujinomiya-shi**
**Shizuoka (JP)**
Inventor: **Fukui, Kiichiro**
**1427-31, Atsuhara**
**Fuji-shi**
**Shizuoka (JP)**

(74) Representative: **Jackson, Peter et al**
**HYDE, HEIDE & O'DONNELL**
**10-12 Priests Bridge**
**London SW15 5JE (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.09/3.3.3)

## Description

The present invention relates to an improved insert injection molding method for preparing an insert molded article having excellent airtightness, adhesion and adhesive property at the insert part thereof, and an insert molded article prepared by said method.

[Prior Art]

Insert injection molding is a molding method comprising placing an insert material having a preliminarily formed intended shape in a mold and conducting injection molding of a thermoplastic resin to prepare a molded article comprising the insert material and the thermoplastic resin integrated therewith, and has been widely used as a method capable of most effectively utilizing the features of both an insert material mainly made of a metal and a resin.

In general, however, the molded article thus prepared is not always satisfactory with respect to the airtightness, adhesion and adhesive property at the boundary between the insert material and the resin. In particular, the molded article cannot be used for applications where airtightness is essentially required. This tendency is remarkable in the case of crystalline resins, such as polyacetal, polyester, polyamide, and polyphenylene sulfide resins, which have a high rate of solidification, bring about a rapid change in the modulus of elasticity around the solidification temperature, and exhibit a large molding shrinkage. This frequently brings about problems. Amorphous resins more or less exhibit the above described tendency as well, and the occurrence of the above-described problems is unavoidable in applications where high airtightness, adhesion and adhesive property are required.

Known means for solving the above described problems of airtightness etc. in the insert molding is to conduct insert molding by making use of an insert material having a surface covered with synthetic rubber. Japanese Patent Laid-Open No 42251/1978 discloses an insert molding method wherein use is made of an insert material having an organic polymer material coating provided on the surface thereof and more particularly discloses coating of an insert material with an epoxy resin or nylon.

Although the above-described method known in the art can improve the airtightness of the insert molded article to a considerable extent, the airtightness, adhesion, and adhesive property are yet insufficient when the molded article is used under severer conditions, e.g., under a high pressure. Further, the durability of the airtightness, adhesion and adhesive property is also insufficient when the molded article is used in applications where it is exposed to a high temperature or a low temperature, or repeatedly exposed to such a temperature.

As is apparent from the foregoing description, a large obstacle to the preparation of a functional part with a resin is that no insert molded article having excellent airtightness etc. and durability thereof can be prepared by insert molding of a thermoplastic resin. Therefore, an improvement in the insert molding method has been eagerly desired.

The present inventors have made extensive and intensive studies with a view to solving the above-described problems and to prepare an insert molded article excellent in the airtightness, adhesion and adhesive property at the insert part thereof as well as in the durability of these properties and, as a result, have found that the provision of a coating containing a specific component on the surface of an insert material is every effective, which has led to the completion of the present invention.

Accordingly, the present invention relates to a method of insert injection molding of a thermoplastic resin, characterized by using an insert material having, on the surface thereof, a coating comprising a coating agent composed of an organic polymer compound and, incorporated therein, at least one compound selected from the group consisting of a spiro ortho ester compound, a spiro orthocarbonate compound, a trioxacylooctane compound, and a ketal lactone compound, and also to an insert molded article prepared by said method.

In the present invention, a coating comprising specific components is first provided on the surface of an insert material.

The components constituting the coating, i.e., a feature of the present invention, will now be described.

At the outset, an organic polymer compound (hereinafter referred to as "component (A)") should be present as a constituent component of the coating. The organic polymer compound (component A) serves as a base material for forming an adhesive and elastic coating between the insert material and the molding resin and can be arbitrarily selected from among, e.g., various kinds of rubber such as butadiene, isoprene, nitrile, chloroprene, and acrylic rubbers; various elastomers such as polyurethane, polyester, polyamide, and polyolefin elastomers; various thermoplastic resins such as thermoplastic polyurethane, polyamide, polyester, polycarbonate, polystyrene, polyacrylate, polyvinyl alcohol, polyvinyl acetate, and polyvinyl

chloride; and thermosetting resins such as epoxy, phenolic, melamine, and unsaturated polyester resins. Preferable examples thereof include polyurethane resin, polyamide resin, elastomer, and synthetic rubber.

As described above, a coating of an insert material with the above-described component alone cannot exhibit any sufficient effect of improving the airtightness etc. of the insert molded article. By contrast, the present invention is characterized in that the coating further contains at least one compound (hereinafter referred to as "component (B)") selected from the group consisting of a spiro ortho ester compound, a spiro orthocarbonate compound, a trioxacyclooctane compound, and a ketal lactone compound. The use of a coating comprising the above-described components brings about a remarkable improvement in the airtightness etc. of the insert molded article.

Component (B) mainly serves to make the coating nonshrinkable. Component (B) is throught to form a crosslinked structure and expand when intramolecular irreversible ring opening is conducted in the presence of a cationic catalyst, and exhibit the effect of improving the adhesion between the insert material and the molded resin of the insert molded article and, at the same time, relaxing external stress and reducing strain through the presence between the insert material and the molded resin of the insert molded article. Component (B) is particularly preferably a spiro ortho ester compound, and representative examples thereof include 2,2-bis-[4-(2,3-epoxypropoxy)phenyl]propane/6-hexanolide polyaddition product and 8,10,19,20-tetraoxatrispiro-[5.2.2.5.2.2]heneicosane-2,14-diene. Particularly preferred among them is a spiro ortho ester compound which has a degree of spiro ortho esterification of 250 to 500 g/eq, more preferably 300 to 400 g/eq and an epoxy value of 0 to 5.0 g/eq, particularly preferably 4.65 g/eq. A spiro orthocarbonate compound is another preferred substance, and specific examples thereof include compounds represented by the following formulae:

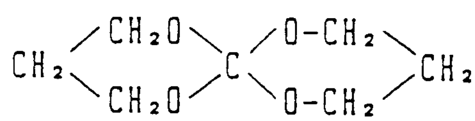

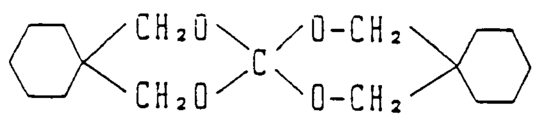

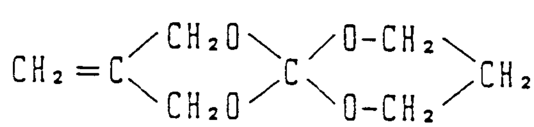

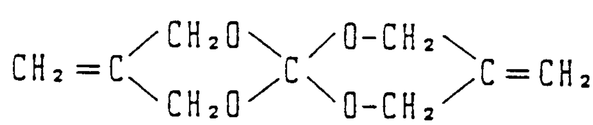

A cationic component in a reaction system brings about the ring opening of the above-described compound (component B). In general, it is preferred that the ring opening reaction be accelerated through the presence of a catalyst such as methylhexahydrophthalic anhydride and di-n-butyltin dilaurate. However, the ring opening occurs also through an influence of a filler having -COOH, $-SO_3H$, or an acidic hydroxyl group (such as aluminum silicate, magnesium silicate, or organic microgel having a carboxyl group on the surface thereof) present in the system. Since it is difficult to bring about the ring-opening reaction at room temperature, the ring opening reaction must be promoted by heating at least once between the step of applying a coating on the insert material and the use of the molded article. Since component (B) generally enables sufficient ring opening and expansion by the heat of the resin necessarily applied during molding, there is no need of further heating. However, if desired, the insert material may be heated after application of a coating on the surface thereof for the purpose of conducting the ring opening and expansion of component (B) combined with drying and fixing of the coating. Alternatively, post-heating may be conducted after molding.

There is no particular limitation with respect to when component (B) must be reacted for ring opening and expansion. Specifically, component (B) may be present in a ring-opened and expanded state in a coating applied on the surface of the insert material. Further, the ring of component (B) may be in a partially or entirely opened state.

In the present invention, the coating applied on the surface of the insert material mainly comprises the above-described components (A) and (B). Although a sufficient effect of improving the airtightness, adhesive property, etc. can be attained by the presence of components (A) and (B) only, a further improved effect can be attained by additionally incorporating at least one member selected from the group consisting of a cellulose derivative and a hydroxyl-containing surfactant. The cellulose derivative (hereinafter referred to as "component (C)") serves to impart a film forming property (hot flowability) and the hardness of the formed coating, and examples thereof particularly suitable for attaining the object of the present invention include cellulose esters such as cellulose acetate, cellulose propionate, cellulose butyrate, cellulose acetate propionate, cellulose acetate butyrate, and cellulose nitrate. Particularly preferred are cellulose acetate butyrate and cellulose acetate propionate having a high degree of butyration or propionylation, i.e., a degree of butyration or propionylation of 17 to 55%. The hydroxyl concentration and viscosity of the cellulose derivative are 1.0 to 3.0, more preferably about 1.0 (per four anhydrous glucose units) and 0.01 to 20.0 sec, more preferably about 0.2 sec (standard falling ball viscosity), respectively.

The hydroxyl-containing surfactant (hereinafter referred to as "component (D)") contributes to surface conditioning of the coating and an improvement in the interlaminar adhesion between the insert material and the molded resin. A fluorocarbon or silicone surfactant having a hydroxyl group is particularly preferred. Specific examples of the fluorocarbon surfactant include a hydroxylated perfluroroalkyl surfactant, and specific examples of the silicone surfactant include a hydroxylated organosiloxane. In both the cases, surfactants having a high hydroxyl value are useful. Part of the hydroxyl groups are exposed to the surface in an unbound state and imparts excellent adherability to the molded resin.

It is preferred that the above-described film forming components be compounded so as to have the following percentage composition.

With respect to components (A) and (B) as indispensable components, it is preferred that they be compounded in a component (A) to component (B) ratio of 99 to 50/1 to 50(% by weight).

When the amount of compounding of component (B) is less than 1% by weight, no sufficient effect of expansion and plasticization can be attained and the surface smoothness of the coating is poor, so that the airtightness, adhesive property, etc. can be improved only to a slight extent. On the other hand, when the amounts of components (B) and (A) are more than 50% by weight and less than 50% by weight, respectively, there occurs lack of an adhesive layer for imparting a high adhesion, which often renders the adhesion between the insert material and the molded resin insufficient.

The amounts of compounding of components (A) and (B) are particularly preferably 97 to 65% by weight and 3 to 35% by weight, respectively.

The amount of compounding of component (C) is preferably 0 to 15% by weight from the viewpoint of the adhesion between the insert material and the molded resin. The amount is particularly preferably 0.5 to 10% by weight.

When component (D) is added in excess, there often occurs defects (craters) in the coating. For this reason, component (D) is preferably compounded in an amount of 0 to 5% by weight (based on the whole coating agent composition). The amount of compounding is more preferably 0.05 to 3% by weight.

In the present invention, the coating applied on the surface of the insert material comprises the above-described composition. In order to enhance the coating performance, it is also possible to further add various additives, such as stabilizers and nucleating agents, depending upon the purposes.

In the present invention, a coating can be applied on the surface of the insert material by any method commonly used in the art. One example of the method comprises dissolving the film forming components in a solvent, adjusting the viscosity of the resultant solution, and applying the solution on the insert material by brush coating, spray coating, immersion coating, airless coating, roller coating or shower coating. This method is suitable for applying a coating containing a thermoplastic resin or rubber as component (A). Another example of the method comprises applying a coating solution containing a reactive low-molecular compound and polymerizing or crosslinking the resultant coating. This method is suitable for applying a coating containing a thermosetting resin as component (A).

In the above-described method of applying a coating, it is preferred that after a coating solution containing film forming components has been applied to the surface of the insert material, the resultant coating be heated for removal of the solvent, polymerization, crosslinking under conditions suitable for the purposes. For example, when the purpose of heating is to conduct drying, removal of the solvent, the coating is heated preferably at 40 to 160°C for 2 to 60 min, particularly preferably 80 to 140°C for 5 to 30

min.

In the present invention, it is possible to apply to the insert material two or more coating layers different from each other in the composition as far as at least one of the layers falls within the scope of the coating specified in the present invention.

Further, in the present invention, it is easiest and most effective to provide the coating over the entire surface of the insert material. However, it is also possible to provide the coating on part of the surface of the insert material. The thickness of the coating is preferably 5 to 300 µm. When the thickness is less than 5 µm, no sufficient effect of improving the airtightness and adhesive property can be attained. On the other hand, when the thickness exceeds 300 µm, the smoothness of the coating is lowered. This makes the airtightness slightly insufficient and, in some coating components, lowers the anchor between the insert material and the molded resin. The coating thickness is particularly preferably 10 to 200 µm.

As described above, the invention of the present application is characterized by providing a coating comprising specific components on the surface of an insert material and conducting insert molding. There is no particular limitation with respect to the material for the insert material, and the insert material may be any of metal, ceramic, wood or plastic. Metal is generally used, and the effect of the present invention is more prominently exhibited when a metal having a coefficient of thermal expansion and a thermal conductivity remarkably different from those of the molding resin is used as the insert material.

The insert material having a coating applied thereon is then placed in a mold, and a thermoplastic resin is injection molded to prepare an intended insert molded article. It is possible to use any known insert molding method.

The reason why the insert molded article prepared by making use of the above-described insert material having a coating applied thereon according to the present invention is excellent in the airtightness, adhesion and adhesive property as well as in the durability of these properties are believed to be as follows.

In the prior art method wherein no coating is provided on the insert material, the resin injected through a gate is brought into contact with, e.g., a metal and slides on the surface of the insert material or moves in a complicated manner with the solidification of the surface thereof accompanying the progress of the packing. In this step, fine and complicated unevennesses are formed on the surface of the resin in contact with the insert material. Although the unevennesses are described to some extent when the resin is pressed against the insert material due to solidification and shrinkage of the resin after the completion of the packing, they do not completely disappear but remain in the form of a void at the boundary, which brings about poor airtightness.

The remaining of the unevennesses is remarkable in the case of a crystalline resin which rapidly solidifies, largely shrinks, and brings about a rapid change in the viscosity or elasticity around the solidification temperature. A resin containing a reinforcement is also apt to bring about the formation of unevennesses.

By contrast, in the insert material of the present invention, a coating containing an organic polymer compound having a low thermal conductivity is present on the surface thereof, which prevents the resin from solidifying on the surface of the insert material. Therefore, even if unevennesses are formed, an unsolidified resin or a semi-solidified resin is press-packed into part of the unevennesses to decrease the unevennesses, which contributes to an improvement in the airtightness. Further, in the present invention, the coating further contains component (B), and the expansion accompanying ring opening thereof causes the resin to be more effectively packed in the above-described unevennesses formed during the step of molding, so that the airtightness, adhesion, etc. are markedly improved.

Further, it may be presumed that the presence of a coating containing component (B) at the boundary between the insert material and the resin suppresses occurrence of peeling and formation of a void at the boundary derived from the difference in thermal expansion or shrinkage. between the insert material and the resin, which enables excellent airtightness, adhesion, etc. to be maintained.

The insert molded article prepared by the present invention is believed to exhibit excellent effects through the above-described mechanism, and the present invention exhibits a particularly excellent effect in the case of insert molding by making use of a resin exhibiting a high rate of solidification and a rapid increase in the viscosity or modulus of elasticity around the solidification temperature, for example, crystalline resins such as polyesters, e.g., polyethylene terephthalate and polybutylene terephthalate, polyacetal, polyamide, polyphenylene sulfide, and polypropylene.

Further, a significant effect can be attained also with respect to a resin packed with a reinforcement such as a glass fiber, a glass flake, a carbon fiber, or a metallic fiber. On the other hand, a non-reinforced amorphous resin inherently exhibits relatively excellent airtightness etc. Therefore, in this case, the effect of the present invention is relatively small. However, the method of the present invention is useful for attaining a high degree of airtightness.

The method of insert molding according to the present invention can be employed in combination with other method(s) useful for improving the airtightness. For example, the provision of knurly or annular unevennesses on the surface of the insert material is commonly conducted in the art for the purpose of increasing the anchor between the insert material and the molded resin. The combined use of this method brings about an increase in the contact area between the insert material and the resin, which not only contributes to an improvement in the adhesion but also brings about an increase in the length of the leakage path of a gas, so that a further improvement can be attained with respect to the airtightness as well. Further, the use of an O-ring is also useful.

As is apparent from the foregoing description and Examples, an insert molded article prepared according to the present invention, i.e., by using an insert material having, applied thereto, a coating comprising specific components and insert molding a thermoplastic resin is excellent in the airtightness, adhesive property, and adhesion as well as in the durability of the airtightness etc. even under such conditions that the insert molded article is exposed to a high temperature, a low temperature, or a repetition of a high temperature and a low temperature, and further spoils none of the other characteristics, e.g., anchor and adhesion at the insert portion, which substantiates that the insert molded article of the present invention is a very favorable insert molded article.

Brief Description of the Drawing:

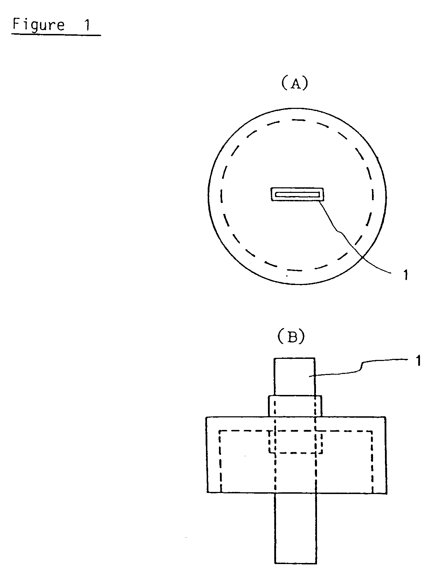

Fig. 1 is a schematic view of a shape of an insert molded article prepared by molding in Examples and Comparative Examples for evaluation of the airtightness of the molded article, wherein (A) is a plan view and (B) is a front view.

1...The reference numeral 1 indicates the insert material.

[Examples]

The present invention will now be described in more detail with reference to the following Examples which should not be construed as limiting the scope of the present invention.

Examples 1 to 8 and Comparative Examples 1 and 2

A polyacetal resin [Duracon M90; a product of Polyplastics Co., Ltd.] was insert molded by making use of a brass insert material having, applied thereto, a coating comprising a composition shown in Table 1. The shape of the insert molded article is shown in Fig. 1.

The insert molded article thus prepared was subjected to evaluation of the airtightness. The results are shown in Table 1.

For comparison, the same evaluation was conducted also with respect to an insert molded article prepared by making use of an insert material having no coating applied thereto and an insert molded article prepared by making use of an insert material having, applied thereto, a coating comprising a composition outside the scope of the present invention. The results are shown in Table 1.

(1) Airtightness after thermal shock treatment:

Cooling at -40 °C for 30 min and heating at 120 °C for 30 min of an insert molded article were repeated 500 times with a thermal shock tester and the treated article was fixed to a jig. The fixed insert molded article was gradually pressurized to 3.0 kg/cm$^2$ in water with an air compressor to measure a pressure at which air bubbles begin to leak from the insert portion (evaluation A). Further, the state of occurrence of air bubbles under a pressure of 3.0 kg/cm$^2$ was evaluated in the five following ranks (evaluation B).

5 ⟵⟶ 1

| | |
|---|---|
| good airtightness (free from occurrence of air bubbles) | poor airtightness (vigorous occurrence of air bubbles) |

(2) Airtightness after high-temperature treatment:

An insert molded article after being heated at 120 °C for 48 hr was subjected to evaluation in the same manner as that described above.

(3) Airtightness after low-temperature treatment:

An insert molded article after being cooled at -40 °C for 48 hr was subjected to evaluation in the same manner as that described above.

(4) Airtightness without heating and cooling treatments:

The measurement of the airtightness was conducted according to the above-described evaluation A with respect to an insert molded article which had been subjected to neither heat treatment nor cooling treatment described in the above items (1) to (3). In this test, a pressure up to 5.0 $kg/cm^2$ was applied.

Table 1

| | | | Ex. 1 | Ex. 2 | Ex. 3 | Ex. 4 | Ex. 5 | Ex. 6 | Ex. 7 | Ex. 8 | Comp. Ex. 1 | Comp. Ex. 2 |
|---|---|---|---|---|---|---|---|---|---|---|---|---|
| Coating composition (wt%) | (A) | polyurethane resin *1 | 90.0 | 80.0 | 80.0 | 77.0 | 79.7 | 76.7 | 86.7 | 73.7 | — | 100 |
| | (B) | spiro ortho ester compound *2 | 10.0 | 20.0 | 20.0 | 20.0 | 20.0 | 20.0 | 10.0 | 20.0 | — | — |
| | (C) | cellulose acetate butyrate | — | — | — | 3.0 | — | 3.0 | 3.0 | 6.0 | — | — |
| | (D) | hydroxyl-containing fluorocarbon surfactant *3 | — | — | — | — | 0.3 | 0.3 | 0.3 | 0.3 | — | — |
| Coating thickness (µm) | | | 80~100 | 20~30 | 80~100 | 80~100 | 80~100 | 80~100 | 80~100 | 80~100 | — | 80~100 |
| Results of evaluation on airtightness | after thermal shock treatment | evaluation A (kg/cm²) | 2.0 | 2.1 | 2.3 | 2.8 | 2.5 | 3.0 | 2.7 | 3.0 | 0.5 | 0.9 |
| | | evaluation B | 3 | 3 | 3~4 | 4~5 | 4 | 5 | 4 | 5 | 1 | 1~2 |
| | after high-temperature treatment | evaluation A (kg/cm²) | 2.2 | 2.2 | 2.8 | 3.0< | 3.0< | 3.0< | 3.0< | 3.0< | 0.5 | 1.1 |
| | | evaluation B | 3~4 | 3~4 | 4~5 | 5 | 5 | 5 | 5 | 5 | 1 | 2 |
| | after low-temperature treatment | evaluation A (kg/cm²) | 2.4 | 2.3 | 3.0< | 3.0< | 3.0< | 3.0< | 3.0< | 3.0< | 0.6 | 1.2 |
| | | evaluation B | 3~4 | 3~4 | 5 | 5 | 5 | 5 | 5 | 5 | 1 | 2 |
| | without heat and cooling treatments | evaluation A (kg/cm²) | 3.5 | 3.4 | 3.8 | 4.6 | 4.2 | 5.0< | 5.0< | 5.0< | 1.2 | 2.3 |

*1 Burnock; a product of Dainippon Ink & Chemicals, Inc.

*2 2,2-bis[4-(2,3-epoxypropoxy)phenyl]propane/6-hexanolide polyaddition product (catalyst: di-n-butyltin dilaurate)

*3 Defensa MCF-312; a product of Dainippon Ink & Chemicals, Inc.

Examples 9 to 14 and Comparative Examples 3 to 6

Insert molding and evaluation of the molded article were conducted in the same manned as that of Examples 1 to 8, except that a polyacetal resin (POM) containing 20% by weight of glass fibers or 20% by weight of carbon fibers incorporated therein was used as the molding resin and the coating composition to

be applied to the insert material was varied as shown in Table 2.

For comparison, the same evaluation was conducted also with respect to an insert molded article prepared by making use of an insert material having no coating applied thereto and an insert molded article prepared by making use of an insert material having, applied thereto, a coating comprising a composition outside the scope of the present invention. The results are shown in Table 2.

Table 2

| | | | Ex. | | | | | | Comp. Ex. | | | |
|---|---|---|---|---|---|---|---|---|---|---|---|---|
| | | | 9 | 10 | 11 | 12 | 13 | 14 | 3 | 4 | 5 | 6 |
| Molding resin composition (wt%) | | POM | 80 | 80 | 80 | 80 | 80 | 80 | 80 | 80 | 80 | 80 |
| | | glass fiber | 20 | 20 | 20 | 20 | — | — | 20 | 20 | — | — |
| | | carbon fiber | — | — | — | — | 20 | 20 | — | — | 20 | 20 |
| Coating composition (wt%) | (A) | polyurethane resin *1 | 80.0 | 77.0 | 79.7 | 76.7 | 80.0 | 76.7 | — | 100 | — | 100 |
| | (B) | spiro ortho ester compound *2 | 20.0 | 20.0 | 20.0 | 20.0 | 20.0 | 20.0 | — | — | — | — |
| | (C) | cellulose acetate butyrate | — | 3.0 | — | 3.0 | — | 3.0 | — | — | — | — |
| | (D) | hydroxyl-containing fluorocarbon surfactant *3 | — | — | 0.3 | 0.3 | — | 0.3 | — | — | — | — |
| Coating thickness (µm) | | | 80~100 | 80~100 | 80~100 | 80~100 | 80~100 | 80~100 | — | 80~100 | — | 80~100 |
| Results of evaluation on airtightness | after thermal shock treatment | evaluation A ($kg/cm^2$) | 2.4 | 3.0< | 2.8 | 3.0< | 2.6 | 3.0< | 0.6 | 1.2 | 0.6 | 1.2 |
| | | evaluation B | 4 | 5 | 4~5 | 5 | 4 | 5 | 1 | 2 | 1 | 2 |
| | after high-temperature treatment | evaluation A ($kg/cm^2$) | 3.0< | 3.0< | 3.0< | 3.0< | 3.0< | 3.0< | 0.6 | 1.3 | 0.7 | 1.4 |
| | | evaluation B | 5 | 5 | 5 | 5 | 5 | 5 | 1 | 2 | 1 | 2 |
| | after low-temperature treatment | evaluation A ($kg/cm^2$) | 3.0< | 3.0< | 3.0< | 3.0< | 3.0< | 3.0< | 0.6 | 1.4 | 0.7 | 1.5 |
| | | evaluation B | 5 | 5 | 5 | 5 | 5 | 5 | 1 | 2 | 1 | 2 |
| | without heat and cooling treatments | evaluation A ($kg/cm^2$) | 4.2 | 5.0< | 4.7 | 5.0< | 4.3 | 5.0 | 1.3 | 2.4 | 1.3 | 2.6 |

*1 to *3 respectively corresponding to those shown in Table 1.

Examples 15 to 21 and Comparative Examples 7 to 8

Insert molding and evaluation of the molded article were conducted in the same manner as that of Examples 1 to 8 by making use of the above-described polyacetal resin as the molding resin, except that the components and composition of the coating to be applied to the insert material were varied as shown in Table 3 (coating thickness: 80 to 100 µm).

For comparison, the same evaluation was conducted also with respect to an insert molded article prepared by making use of an insert material having no coating applied thereto and an insert molded article prepared by making use of an insert material having, applied thereto, a coating comprising a composition outside the scope of the present invention. The results are shown in Table 3.

Table 3

| | | | | Ex. | | | | | | | Comp. Ex. | | | |
|---|---|---|---|---|---|---|---|---|---|---|---|---|---|---|
| | | | | 15 | 16 | 17 | 18 | 19 | 20 | 21 | (1) | 7 | 8 | (2) |
| Coating composition (wt%) | (A) | polyurethane resin *1 | | — | — | — | — | 76.7 | 76.7 | 76.7 | — | — | — | 100 |
| | | polyester elastomer *4 | | 80 | 76.7 | — | — | — | — | — | — | 100 | — | — |
| | | chloroprene rubber *5 | | — | — | 80 | 76.7 | — | — | — | — | — | 100 | — |
| | (B) | spiro ortho ester compound *2 | | 20 | 20 | 20 | 20 | — | 20 | 20 | — | — | — | — |
| | | spiro orthocarbonate compound *6 | | — | — | — | — | 20 | — | — | — | — | — | — |
| | (C) | cellulose acetate butyrate | | — | 3.0 | — | 3.0 | 3.0 | — | 3.0 | — | — | — | — |
| | | cellulose acetate propionate | | — | — | — | — | — | 3.0 | — | — | — | — | — |
| | (D) | hydroxyl-containing fluorocarbon surfactant *3 | | — | 0.3 | — | 0.3 | 0.3 | 0.3 | — | — | — | — | — |
| | | hydroxyl-containing surfactant *7 | | — | — | — | — | — | — | 0.3 | — | — | — | — |
| Results of evaluation on airtightness | | after thermal shock treatment | evaluation A (kg/cm²) | 2.2 | 3.0< | 2.3 | 3.0< | 2.9 | 3.0< | 3.0< | 0.5 | 0.8 | 0.9 | 0.9 |
| | | | evaluation B | 3 ~ 4 | 5 | 3 ~ 4 | 5 | 3 ~ 4 | 5 | 5 | 1 | 1 ~ 2 | 1 ~ 2 | 1 ~ 2 |
| | | after high-temperature treatment | evaluation A (kg/cm²) | 2.6 | 3.0< | 2.6 | 3.0< | 3.0< | 3.0< | 3.0< | 0.5 | 0.9 | 1.0 | 1.1 |
| | | | evaluation B | 4 | 5 | 4 | 5 | 5 | 5 | 5 | 1 | 1 ~ 2 | 1 ~ 2 | 2 |
| | | after low-temperature treatment | evaluation A (kg/cm²) | 3.0< | 3.0< | 3.0< | 3.0< | 3.0< | 3.0< | 3.0< | 0.6 | 1.1 | 1.2 | 1.2 |
| | | | evaluation B | 5 | 5 | 5 | 5 | 5 | 5 | 5 | 1 | 2 | 2 | 2 |
| | | without heat and cooling treatments | evaluation A (kg/cm²) | 3.7 | 5.0< | 4.0 | 5.0< | 5.0< | 5.0< | 5.0< | 1.1 | 2.0 | 2.3 | 2.4 |

*1 to *3: respectively corresponding to those shown in Table 1.

*4: Hytrel; a product of Toray Industries, Inc. and E.I. du Pont de Nemours & Co.

*5: Neoprene; a product of Showa Denko K.K. and E.I. du Pont de Nemours & Co.

*6: a compound having the following structural formula:

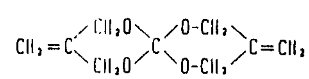

*7: BYK No-370; a product of Big Chemi Inc.

Examples 22 to 25 and Comparative Examples 9 to 12

Polybutylene terephthalate (PBT) and polyphenylene sulfide (PPS) containing glass fibers incorporated therein were used as the molding resin. A coating having a composition shown in Table 4 was applied to an

insert material (coating thickness: 80 to 100 µm). Insert molding was conducted to prepare an insert molded material, and the insert molded material thus prepared was evaluated.

For comparison, the same evaluation was conducted also with respect to an insert molded article prepared by making use of an insert material having no coating applied thereto and an insert molded article prepared by making use of an insert material having, applied thereto, a coating comprising a composition outside the scope of the present invention. The results are shown in Table 4.

Table 4

| | | | Ex. 22 | Ex. 23 | Ex. 24 | Ex. 25 | Comp. Ex. 9 | Comp. Ex. 10 | Comp. Ex. 11 | Comp. Ex. 12 |
|---|---|---|---|---|---|---|---|---|---|---|
| Molding resin composition (wt%) | | PBT | 70 | 70 | — | — | 70 | 70 | — | — |
| | | PPS | — | — | 60 | 60 | — | — | 60 | 60 |
| | | glass fiber | 30 | 30 | 40 | 40 | 30 | 30 | 40 | 40 |
| Coating composition (wt%) | (A) | polyurethane resin *1 | 80 | 76.7 | 80 | 76.7 | — | 100 | — | 100 |
| | (B) | spiro ortho ester compound *2 | 20 | 20 | 20 | 20 | — | — | — | — |
| | (C) | cellulose acetate butyrate | — | 3 | — | 3 | — | — | — | — |
| | (D) | hydroxy-containing fluorocarbon surfactant *3 | — | 0.3 | — | 0.3 | — | — | — | — |
| Results of evaluation of airtightness | after thermal shock treatment | evaluation A (kg/cm²) | 2.8 | 3.0< | 3.0< | 3.0< | 0.8 | 1.2 | 0.9 | 1.3 |
| | | evaluation B | 4~5 | 5 | 5 | 5 | 1 | 2 | 1 | 2 |
| | after high-temperature treatment | evaluation A (kg/cm²) | 3.0< | 3.0< | 3.0< | 3.0< | 0.8 | 1.4 | 1.0 | 1.4 |
| | | evaluation B | 5 | 5 | 5 | 5 | 1 | 2 | 1~2 | 2 |
| | after low-temperature treatment | evaluation A (kg/cm²) | 3.0< | 3.0< | 3.0< | 3.0< | 1.0 | 1.4 | 1.2 | 1.6 |
| | | evaluation B | 5 | 5 | 5 | 5 | 1~2 | 2 | 2 | 2 |
| | without heat and cooling treatments | evaluation A (kg/cm²) | 4.8 | 5.0< | 5.0< | 5.0< | 1.9 | 2.5 | 2.2 | 2.8 |

*1 to *3 respectively corresponding to those shown in Table 1.

## Claims

1. A method of insert injection molding of a thermoplastic resin, characterised by using an insert material having, applied to the surface thereof, a coating comprising a coating agent composed of an organic

polymer compound (A) and, incorporated therein, at least one compound (B) selected from a spiro orthoester compound, a spiro orthocarbonate compound, a trioxacylooctane compound and a ketal lactone compound.

**2.** A method of insert injection molding according to claim 1, wherein said organic polymer compound (A) is selected from a polyurethane resin, a polyester resin, a polyamide resin, an elastomer and a synthetic rubber.

**3.** A method of insert injection molding according to claim 1 or claim 2, wherein the compound (B) is a spiro orthoester compound which has a degree of spiro ortho esterification of 250 to 500 g/eq and an epoxy value of 0 to 5.0 g/eq.

**4.** A method of insert injection molding according to any preceding claim, wherein said coating agent further comprises at least one compound selected from a cellulose derivative (C) and a hydroxyl-containing surfactant (D).

**5.** A method of insert injection molding according to claim 4, wherein said cellulose derivative (C) is cellulose acetate butyrate or cellulose acetate propionate having a degree of butyration or propionation of 17 to 55%.

**6.** A method of insert injection molding according to claim 4 or claim 5, wherein said hydroxyl-containing surfactant (D) is a fluorocarbon or silicone surfactant having a hydroxyl group.

**7.** A method of insert injection molding according to any preceding claim, wherein the proportions of the components of the coating agent are, by weight:
(A) 50 to 99%
(B) 1 to 50%
(C) 0 to 15%
(D) 0 to 5%.

**8.** A method of insert injection molding according to any preceding claim, wherein the coating has a thickness in the range 5 to 300$\mu$m.

**9.** A method of insert injection molding according to any preceding claim, wherein the thermoplastic resin is a crystalline thermoplastic resin.

**10.** An insert molded article prepared by a method of insert injection molding according to any preceding claim.

## Patentansprüche

**1.** Verfahren zum Einlage-Spritzgießen eines thermoplastischen Harzes, gekennzeichnet durch die Verwendung eines Einlagematerials mit einer auf seiner Oberfläche aufgetragenen Beschichtung, umfassend ein Beschichtungsmittel, das aus einer organischen Polymerverbindung (A) besteht, und darin aufgenommen wenigstens eine Verbindung (B), die ausgewählt ist aus einer Spiro-Orthoesterverbindung, einer Spiro-Orthocarbonatverbindung, einer Trioxacyclooctanverbindung und einer Ketal-Lactonverbindung.

**2.** Verfahren zum Einlage-Spritzgießen gemäß Anspruch 1, wobei die organische Polymerverbindung (A) ausgewählt ist aus einem Polyurethanharz, einem Polyesterharz, einem Polyamidharz, einem Elastomer und einem synthetischen Kautschuk.

**3.** Verfahren zum Einlage-Spritzgießen gemäß Anspruch 1 oder 2, wobei die Verbindung (B) eine Spiro-Orthoesterverbindung mit einem Grad der Spiro-Orthoveresterung von 250 bis 500 g/eq und einem Epoxywert von 0 bis 5,0 g/eq ist.

**4.** Verfahren zum Einlage-Spritzgießen gemäß einem der vorangehenden Ansprüche, wobei das Beschichtungsmittel weiterhin wenigstens eine Verbindung umfaßt, die aus einem Cellulosederivat (C) und einem

hydroxylhaltigen Tensid (D) ausgewählt ist.

5. Verfahren zum Einlage-Spritzgießen gemäß Anspruch 4, wobei das Cellulosederivat (C) Celluloseacetatbutyrat oder Celluloseacetatpropionat mit einem Grad der Butyrierung oder Propionierung von 17 bis 55% ist.

6. Verfahren zum Einlage-Spritzgießen gemäß Anspruch 4 oder 5, wobei das hydroxylhaltige Tensid (D) ein Fluorkohlenstoff- oder Silikontensid mit einer Hydroxylgruppe ist.

7. Verfahren zum Einlage-Spritzgießen gemäß einem der vorangehenden Ansprüche, wobei die Gewichtsverhältnisse der Bestandteile des Beschichtungsmittels sind:
   (A) 50 bis 99%
   (B) 1 bis 50%
   (C) 0 bis 15%
   (D) 0 bis 5%.

8. Verfahren zum Einlage-Spritzgießen gemäß einem der vorangehenden Ansprüche, wobei die Beschichtung eine Dicke im Bereich 5 bis 300 µm hat.

9. Verfahren zum Einlage-Spritzgießen gemäß einem der vorangehenden Ansprüche, wobei das thermoplastische Harz ein kristallines thermoplastisches Harz ist.

10. Einlage-geformter Gegenstand, der nach einem Verfahren zum Einlage-Spritzgießen gemäß einem der vorangehenden Ansprüche hergestellt wurde.

**Revendications**

1. Procédé de moulage par injection, avec une pièce d'insertion, d'une résine thermoplastique, caractérisé en ce qu'on utilise un matériau d'insertion dont la surface est revêtue d'un revêtement comprenant un agent de revêtement formé d'un composé polymère organique (A) dans lequel est incorporé au moins un composé (B) choisi parmi un composé spiro-orthoester, un composé spiro-orthocarbonate, un composé trioxacylooctane et un composé cétal lactone.

2. Procédé de moulage par injection avec une pièce d'insertion selon la revendication 1, où ledit composé polymère organique (A) est choisi parmi une résine de polyuréthane, une résine de polyester, une résine de polyamide, un élastomère et un caoutchouc synthétique.

3. Procédé de moulage par injection avec une pièce d'insertion selon la revendication 1 ou la revendication 2, où le composé (B) est composé spiro-orthoester ayant un degré de spiro-orthoestérification de 250 à 500 g/éq. et une valeur époxy de 0 à 5,0 g/éq.

4. Procédé de moulage par injection avec une pièce d'insertion selon l une quelconque des revendications précédentes, où ledit agent de revêtement comprend, en outre, au moins un composé choisi parmi un dérivé cellulosique (C) et un agent tensio-actif (D) contenant un groupe hydroxyle.

5. Procédé de moulage par injection avec une pièce d'insertion selon la revendication 4, où ledit dérivé cellulosique (C) est l'acétobutyrate de cellulose ou l'acétopropionate de cellulose, ayant un degré de butyration ou de propionation de 17 à 55 %.

6. Procédé de moulage par injection avec une pièce d'insertion selon la revendication 4 ou la revendication 5, où ledit agent tensio-actif (D) contenant un groupe hydroxyle est un agent tensio-actif fluorocarboné ou à base de silicone ayant un groupe hydroxyle.

7. Procédé de moulage par injection avec une pièce d'insertion selon l'une quelconque des revendications précédentes, où les proportions en poids des composants de l'agent de revêtement sont les suivantes :
   (A) 50 à 99 %
   (B) 1 à 50 %

(C) 0 à 15 %
(D) 0 à 5 %.

**8.** Procédé de moulage par injection avec une pièce d'insertion selon l'une quelconque des revendications précédentes, où le revêtement a une épaisseur comprise entre 5 et 300 $\mu$m.

**9.** Procédé de moulage par injection avec une pièce d'insertion selon l'une quelconque des revendications précédentes, où la résine thermoplastique est une résine thermoplastique cristalline.

**10.** Article moulé avec une pièce d'insertion, préparé au moyen d'un procédé de moulage par injection avec une pièce d'insertion selon l'une quelconque des revendications précédentes.

Figure 1

(A)

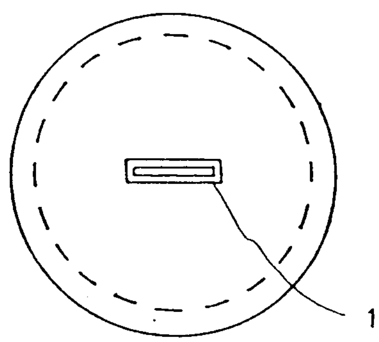


(B)